# EUROPÄISCHE PATENTSCHRIFT

(11) **EP 1 861 270 B1**
(45) Veröffentlichungstag und Bekanntmachung des Hinweises auf die Patenterteilung: **21.07.2010**
(21) Anmeldenummer: 06722654.8
(22) Anmeldetag: 20.03.2006
(51) Int. Cl.: B60H 1/00, B04C 3/00

(54) **GROBSTAUBVORABSCHEIDER FÜR KRAFTFAHRZEUGKLIMAANLAGEN**
COARSE DUST PRE-SEPARATOR FOR VEHICLE AIR CONDITIONING UNITS
DISPOSITIF DE SEPARATION PREALABLE DE PARTICULES DE POUSSIERE GROSSIERES, DESTINE A DES SYSTEMES DE CLIMATISATION DE VEHICULES AUTOMOBILES

(30) Priorität: 21.03.2005 DE 102005013491
(43) Veröffentlichungstag der Anmeldung: 05.12.2007
(73) Patentinhaber: Spheros GmbH, 82205 Gilching (DE)
(72) Erfinder: NEIDENBERGER, Peter, 82256 Fürstenfeldbruck (DE); MOESELER, Markus, 82229 Seefeld (DE); SCHEID, Helmut, 86920 Denklingen (DE)
(74) Vertreter: Strasser, Wolfgang
(86) Internationale Anmeldenummer: PCT/DE2006/000500
(87) Internationale Veröffentlichungsnummer: WO 2006/099852

(56) Entgegenhaltungen:
- EP-A- 0 125 562
- FR-A- 2 605 271
- FR-A- 2 863 949
- US-A- 4 469 490
- US-A- 4 514 198

## Beschreibung

Die Erfindung betrifft eine Anordnung zum Klimatisieren des Innenraums eines Kraftfahrzeugs, die eine modulare Klimaanlage mit einem. Grobstaubvorabscheider zur Filterung von Verunreinigungen aus der für die Klimaanlage bestimmten Frischluft umfasst.

Klimaanlagen für Kraftfahrzeuge, insbesondere Kompaktaufdachklimaanlagen für Omnibusse, beziehen ihre Frischluft beziehungsweise ihren Frischluftanteil aus der direkten Umgebung. Dabei können die in dieser Umgebungsluft befindlichen Schmutzpartikel wie etwa Staub, Blätter, Insekten etc. angesaugt und so in das Innere der Klimaanlage gelangen. Im Inneren der Anlage erfolgt dann üblicherweise eine Abscheidung der Schmutzpartikel über eine geeignete Abscheidevorrichtung wie etwa einem Luftfilter oder Filtermatten. Diese Abscheidevorrichtung muss in Abhängigkeit vom Verunreinigungsgrad des aus der Umgebungsluft stammenden Frischluftanteils gewartet und die entsprechenden Filtermittel regelmäßig getauscht werden. In Umgebungen, in denen die Umgebungsluft einen hohen Staubanteil aufweist, wie beispielsweise in Wüstenländern, ist der Einsatz von Kompaktaufdachklimaanlagen mit derartigen Frischluftansaugungen nur bedingt möglich. Da Schmutz in das Anlageninnere gelangen kann, verschmutzen der Innenbereich der Anlage sowie auch der Fahrgastraum innerhalb kürzester Zeit. Insbesondere führt eine Verschmutzung der Wärmetauscher (Verdampfer) zu einer Leistungsminderung der Klimaanlage. Da die Abscheidevorrichtung für Frischluft nicht wartungsfrei arbeitet, müsste dem hohen Schmutzaufkommen durch einen unverhältnismäßigen hohen Wartungsaufwand begegnet werden. Dementsprechend erfolgt in staubreichen Gebieten der Klimabetrieb ohne Frischluftanteil, was wiederum erhebliche Abstriche im Komfort bedeutet.

Beim Stand der Technik ist es außerdem bekannt, im Frischluftansaugtrakt von Klimaanlagen weitgehend wartungsfreie Abscheidevorrichtungen einzusetzen. Eine derartige Anordnung ist beispiels weise aus der DE 0 125 562 bekannt. Diese weisen allerdings den Nachteil auf, dass sie bei Reparaturen oder eventuell doch notwendigen Wartungsarbeiten schlecht zugänglich sind. Im Zuge einer möglichst kostengünstigen Herstellung von Kraftfahrzeugklimaanlagen wird außerdem angestrebt, ein derartiges Klimaanlagensystem möglichst weitgehend modular aufzubauen. So können für unterschiedliche Kundenwünsche und Einsatzgebiete die jeweiligen Module zusammengestellt und das System konfiguriert werden. Beim Stand der Technik jedoch muss der durch eine derartige Filtervorrichtung erzeugte Druckabfall innerhalb der Klimaanlage beispielsweise bei der Auslegung des Gebläses berücksichtigt werden. Dies steht einer modularen Zusammenstellung der Klimaanlage entgegen, da das Klimaanlagensystem auf die Abscheidevorrichtung eingestellt werden muss.

Der Erfindung liegt die Aufgabe zugrunde, einen Grobstaubvorabscheider für eine Kraftfahrzeugklimaanlage, eine Klimaanlage für ein Kraftfahrzeug sowie ein Verfahren zur Reinigung von Frischluft für eine Kraftfahrzeugklimaanlage anzugeben, bei denen eine modulare Konfiguration der Klimaanlage möglich ist und gleichzeitig die vorstehend erläuterten Probleme vermieden werden.

Diese Aufgabe wird durch die Merkmale der unabhängigen Ansprüche gelöst.

Vorteilhafte Ausgestaltungen und Weiterbildungen der Erfindung ergeben sich aus den abhängigen Ansprüchen.

Der erfindungsgemäße Grobstaubvorabscheider baut auf dem gattungsgemäßen Stand der Technik dadurch auf, dass er zumindest einen Zyklon und ein Gebläse umfasst. Der Zyklon filtert die Verunreinigungen der Frischluft aus und führt sie bei geeigneter Bauweise kontinuierlich ab. Dabei wird die partikelhaltige Frischluft in eine Drehbewegung versetzt, wodurch auf die Partikel Zentrifugalkräfte wirken. Die Verunreinigungen werden dadurch radial nach außen beschleunigt und vom Frischluftstrom, der innen abgesaugt wird, getrennt. Dies ermöglicht einen weitgehend wartungsfreien Betrieb des Grobstaubvorabscheiders. Durch die Kombination von zumindest einem Zyklon und einem Gebläse kann das durch den Zyklon verursachte Druckgefälle kompensiert werden. Auf diese Weise ist es möglich, je nach Einsatzgebiet der Klimaanlage diese bei Bedarf mit dem Grobstaubvorabscheider auszurüsten, ohne an der Klimaanlage Veränderungen vorzunehmen, die durch ein geändertes Frischluftansaugverhalten bei Einsatz einer herkömmlichen Abscheidevorrichtung notwendig wären. Es entfallen somit weitergehende bauliche Veränderungen in der Klimaanlage und es wird eine modulare Herstellung und Zusammenstellung der Klimaanlage ermöglicht.

Bei einer bevorzugten Ausführungsform ist vorgesehen, dass das Gebläse die verunreinigte Frischluft dem Zyklon zuführt. Dies ermöglicht eine kompakte Bauweise des Grobstaubvorabscheiders und hält die notwendigen Verbindungsleitungen kurz. Vorzugsweise können so der Zyklon und das vorgeschaltete Gebläse als ein Modul ausgeführt werden.

Bei einer besonders bevorzugten Ausführungsform ist vorgesehen, dass der Grobstaubvorabscheider außerhalb eines Frischluftansaugtrakts der Klimaanlage angeordnet ist. Auf diese Weise findet die Filterung von Verunreinigungen im Wesentlichen außerhalb der Klimaanlage statt, innerhalb der Klimaanlage wird nur verhältnismäßig sauber zugeführte Frischluft verwendet. Des Weiteren wird so ein einfacher Aufbau der Klimaanlage unterstützt.

Es kann weiterhin vorteilhaft vorgesehen sein, dass das Gebläse und der Zyklon über eine Luftleitung mit einem sich in Richtung auf den Zyklon zu erweiterndem Querschnitt verbunden sind. Auf diese Weise wird der Zyklon strömungstechnisch vorteilhaft mit der noch verunreinigten Umgebungsluft beschickt. Insbesondere kann so ein Absinken des Drucks und/oder der Strömungsgeschwindigkeit der in Richtung des Zyklons strömenden Frischluft erreicht werden. Dies ermöglicht eine definierte und gleichförmige Luftströmung und somit auch ein gleichmäßiges Filterergebnis.

Weiterhin wird es bevorzugt, dass der Zyklon ein Mehrzellenzyklons ist. Durch die Zusammenfassung mehrerer Zyklonzellen zu einem Mehrzellenzyklon lässt sich kostengünstig ein Zyklonabscheider realisieren, der im Verhältnis zum möglichen Volumendurchsatz ein geringes Bauvolumen beansprucht.

Des Weiteren kann vorteilhaft vorgesehen sein, dass der Grobstaubabscheider mittels eines Luftleitsystems mit dem

Frischluftansaugtrakt der Klimaanlage verbunden ist. Ein derartiges Luftleitsystem kann beispielsweise eine flexible Schlauchleitung darstellen. Auf diese Weise wird wiederum die modulare Bauweise der Klimaanlage begünstigt, insbesondere kann auch der Grobstaubvorabscheider an einer günstigen Stelle innerhalb oder außerhalb der Klimaanlage angebracht werden.

Es kann ebenfalls vorteilhaft vorgesehen sein, dass der Grobstaubabscheider innerhalb des Gehäuses der Klimaanlage angeordnet ist. Auf diese Weise kann der Grobstaubvorabscheider unter Abdeckungen der Klimaanlage angebracht werden und das optische Erscheinungsbild der Klimaanlage wird nicht beeinträchtigt.

Die Erfindung betrifft weiterhin eine Klimaanlage für ein Kraftfahrzeug mit einem Grobstaubvorabscheider gemäß einem der vorhergehenden Ansprüche. Somit werden die erfindungsgemäßen Vorteile und Besonderheiten des Grobstaubabscheiders auch durch eine Klimaanlage verwirklicht. Dies gilt auch für die nachfolgend angegebene bevorzugte Ausführungsform der Klimaanlage.

Es kann insbesondere vorgesehen sein, dass Frischluft nur über den Grobstaubvorabscheider in die Klimaanlage gelangt. Somit ist der Ansaugtrakt der Klimaanlage bis auf die Zuführung für die Frischluft durch den Grobstaubvorabscheider verschlossen. Damit ist sichergestellt, dass nur verhältnismäßig saubere Frischluft, die durch den Grobstaubvorabscheider gereinigt wurde, innerhalb der Klimaanlage verwendet wird.

Die Erfindung betrifft weiterhin ein Verfahren zum Filtern von Frischluft für eine Kraftfahrzeugklimaanlage, das folgende Schritte umfasst:
- Ansaugen.verunreinigter Frischluft über ein Gebläse;
- Zuführen der verunreinigten Frischluft zu einem Zyklon;
- Abscheiden von Verunreinigungen in dem Zyklon;
- Zuführen der gereinigten Frischluft zu dem Frischluftansaugtrakt der Klimaanlage.

Auf diese Weise werden die Vorteile der Erfindung auch im Rahmen eines Verfahrens realisiert.

Der Erfindung liegt die Erkenntnis zugrunde, ein modulares Klimaanlagensystem zur Verfügung zu stellen, dass für unterschiedliche Einsatzbereiche konfiguriert werden kann. Dazu wird, um die Klimaanlage für Umgebungen mit besonders hoher Schmutzpartikelbelastung in der Umgebungsluft auszurüsten, eine Vorabscheidung der Staubpartikel außerhalb des Frischluftansaugtakts der Anlage mittels einer Gebläse-Zyklon-Kombination vorgesehen. Dies erlaubt zum einen eine weitgehend wartungsfreie Vorabscheidung von Staubpartikeln und anderen Verunreinigungen wie Blättern, Insekten, etc bei gleichzeitig leichter Zugänglichkeit für Reparaturen und Wartungen. Des weiteren kann so das gesamte Klimaanlagesystem je nach Kundenwunsch leicht konfiguriert werden. Insbesondere ist es dabei von Vorteil, dass das Gebläse den Druckverlust durch den Zyklon kompensiert und so innerhalb der Klimaanlage keine weitgehenden Veränderungen bei der Konfiguration vorgenommen werden müssen.

Die Erfindung wird nun unter Bezugnahme auf die begleitenden Zeichnungen anhand einer bevorzugten Ausführungsform beispielhaft erläutert.

Dabei zeigen:
- Figur 1: eine schematische Darstellung des erfindungsgemä- ßen Grobstaubvorabscheiders;
- Figur 2: eine perspektivisch Darstellung der Anordnung des Grobstaubvorabscheiders an einer Kompaktauf- dachklimaanlage; und
- Figur 3: ein Flussdiagramm zur Erläuterung einer Ausfüh- rungsform des erfindungsgemäßen Verfahrens.

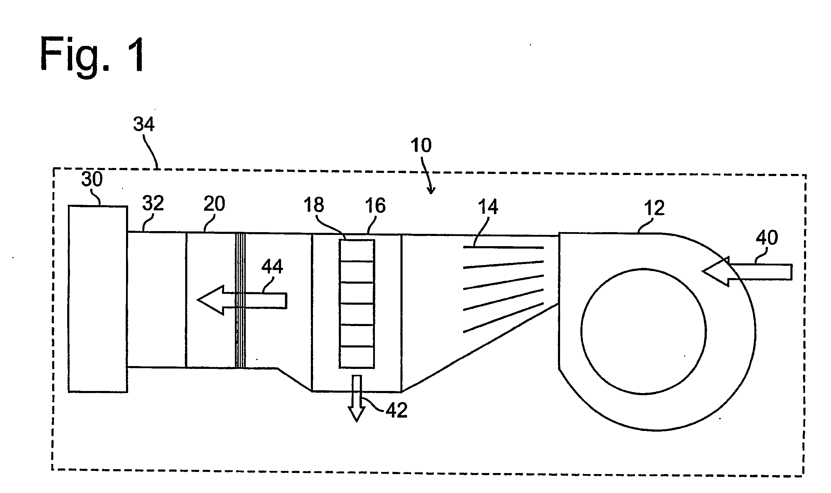

Figur 1 zeigt eine schematische Darstellung des erfindungsgemäßen Grobstaubvorabscheiders. Dieser weist ein Gebläse 12 auf, das beispielsweise eine Luftleistung von ca. 1000 m³/h bei einem Druck von 200 Pa aufweisen kann. Es sei an dieser Stelle bemerkt, dass die hier und im Folgenden angegebenen Werte lediglich beispielhaft sind und keinerlei Beschränkung des Schutzbereichs der Erfindung darstellen sollen. Das Gebläse 12 ist mittels einer geeigneten Luftleitung 14 mit dem Zyklon 16 verbunden. Der Zyklon 16 weist eine Mehrzahl von Zyklonzellen 18 auf. Es sind hier lediglich beispielhaft sechs gleichartige Zellen 18 symbolhaft dargestellt. Dabei kann es sich um einzelne Zyklonzellen oder um Zyklonarrays handeln. Selbstverständlich kann auch eine größere oder eine kleinere Anzahl gleicher oder verschiedenartiger Zyklonzellen/-arrays gewählt werden. An den Zyklon 16 schließt sich ein aus einer flexiblen Schlauchleitung bestehendes Luftleitsystem 20 an. Dieses verbindet den Grobstaubvorabscheider 10 mit dem Frischluftansaugtrakt 32 der Klimaanlage 30. Insgesamt umgibt ein Gehäuse 34 sowohl die Klimaanlage 30 als auch den Grobstaubvorabscheider 10.

Das Gebläse 12 saugt beispielsweise mit Staubpartikeln verunreinigte Umgebungsluft 40 an und fördert diese über die Luftleitung 14 durch den Zyklon 16. Es wird durch eine geeignete Anordnung der Kombination von Zyklonzellen 18 und der Luftleitung 14 ein gleichförmiger konstanter Volumenstrom für jede Zyklonzelle 18 erreicht. Dabei kann beispielsweise ein Volumenstrom pro Zelle von ca. 0,2 m³/min erzielt werden. Selbstverständlich sind je nach Strömungsgeometrie und Gebläseleistung auch deutlich größere oder kleinere Werte möglich. Innerhalb der Zyklonzellen 18 werden auf bekannte Weise die in der Umgebungsluft enthaltenen Staub- und Verunreinigungspartikel von der Umgebungsluft getrennt. Dies ist als Staubaustrag 42 symbolisch dargestellt. Die nunmehr gereinigte Frischluft 44 wird nachfolgend über die flexible Schlauchleitung 20 dem Frischluftansaugtrakt 32 der Klimaanlage 30 zur Verfügung gestellt. Dabei ist vorgesehen, dass der Ansaugtrakt 32 bis auf die Zufuhröffnung über die flexible Schlauchleitung 20 verschlossen ist, um sicherzustellen, dass nur Frischluft, die über den Zyklon 16 geführt wurde, in die Anlage gelangt.

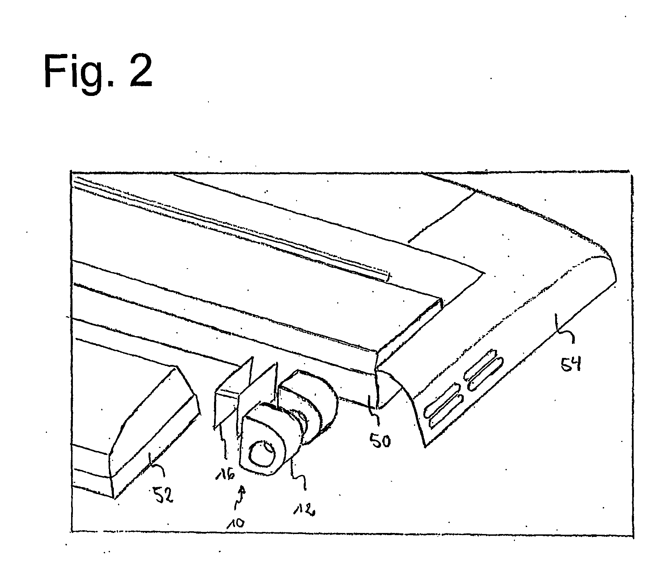

Figur 2 zeigt eine perspektivische Darstellung der Anordnung des Grobstaubvorabscheiders 10 an einer Kompaktaufdachklimaanlage. Die Darstellung zeigt dabei einen Ausschnitt einer Kompaktaufdachklimaanlage für Omnibusse. In schematisierter Form sind die Verflüssigerabdeckung 50 sowie die Verdampfereinheit 52 abgebildet. Die Abdeckung 54 nicht vollständig, sondern nur teilweise im hinteren Bereich gezeigt. Unter dem nicht dargestellten vorderen Bereich der Abdeckung 54 ist der Grobstaubvorabscheider 10 angeordnet. Dargestellt sind das Gebläse 12 als ein Doppelradialgebläse sowie schematisch der Zyklon 16. Weitere Komponenten wie Schlauchverbindungen etc. sind aus Gründen der Übersichtlichkeit in Figur 2 nicht gezeigt.

In dieser beispielhaften Anordnung ist der Grobstaubvorabscheider 10 in direkter Nähe der Aufdachklimaanlage unter deren Abdeckung 54 angebracht. Auf diese Weise ist er von außen nicht zu sehen und beeinträchtigt so den optischen Eindruck nicht.

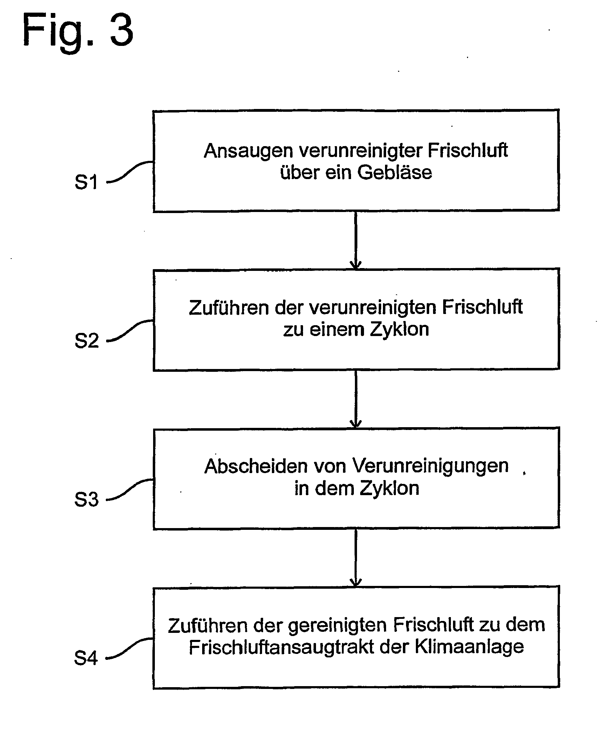

Figur 3 zeigt ein Flussdiagramm zur Erläuterung einer Ausführungsform des erfindungsgemäßen Verfahrens. Mit Schritt S1 startet das Verfahren. In Schritt S1 wird beispielsweise durch Staubpartikel verunreinigte Umgebungsluft als Frischluft über ein Gebläse angesaugt. Dieses Gebläse führt in Schritt 2 die angesaugte Frischluft einem Zyklon zu. Dabei kann es sich beispielsweise um einen Mehrzellenzyklonabscheider handeln, es kann aber auch nur eine einzelne Zyklonzelle vorhanden sein. In Schritt S3 durchströmt die verunreinigte Frischluft den Zyklon. Dabei werden die in der Luft vorhandenen Verunreinigungen abgeschieden und beispielsweise einem Staubaustrag zugeführt. Die so gereinigte Frischluft wird mit Schritt S4 dem Frischluftansaugtrakt der Klimaanlage zugeführt.

Die in der vorstehenden Beschreibung, Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Grobstaubvorabscheider
- 12: Gebläse
- 14: Luftleitung
- 16: Zyklon
- 18: Zyklonzelle/-array
- 20: flexible Schlauchleitung
- 30: Klimaanlage
- 32: Frischluftansaugtrakt
- 34: Gehäuse
- 40: verunreinigte Frischluft
- 42: Staubausfall
- 44: gereinigte Frischluft
- 50: Verflüssigerabdeckung
- 52: Verdampfereinheit
- 54: Abdeckung

## Patentansprüche

1. Anordnung zum Klimatisieren des Innenraums eines Kraftfahrzeugs, die eine modulare Klimaanlage mit einem Gebläse zum Ansaugen von Frischluft und einen Grobstaubvorabscheider umfasst, der zur Filterung von Verunreinigungen aus der für die Klimaanlage bestimmten Frischluft zumindest einen Zyklon aufweist, **dadurch gekennzeichnet, dass** ein zusätzliches Gebläse (12) vorgesehen ist, das dem Zyklon (16) verunreinigte Frischluft (40) zuführt.

2. Anordnung nach Anspruch 1, **dadurch gekennzeichnet, dass** der Grobstaubvorabscheider (10) außerhalb eines Frischluftansaugtrakts (32) der Klimaanlage (30) angeordnet ist.

3. Anordnung nach einem der vorhergehenden Ansprüche, **dadurch gekennzeichnet, dass** das zusätzliche Gebläse (12) und der Zyklon (16) über eine Luftleitung (14) mit einem sich in Richtung auf den Zyklon zu erweiterndem Querschnitt verbunden sind.

4. Anordnung nach einem der vorhergehenden Ansprüche, **dadurch gekennzeichnet, dass** der Zyklon ein Mehrzellenzyklon (16) ist.

5. Anordnung nach einem der vorhergehenden Ansprüche, **dadurch gekennzeichnet, dass** der Grobstaubvorabscheider (10) mittels eines Luftleitsystems (20) mit dem Frischluftansaugtrakt (32) der Klimaanlage (30) verbunden ist.

6. Anordnung nach einem der vorhergehenden Ansprüche, **dadurch gekennzeichnet, dass** der Grobstaubvorabscheider (10) innerhalb des Gehäuses (34) der Klimaanlage (30) angeordnet ist.

## Claims

1. An arrangement for air-conditioning the interior of a motor vehicle, which includes a modular air-conditioning installation having a blower for sucking in fresh air and a coarse dust pre-separator which has at least one cyclone for filtering impurities out of the fresh air intended for the air-conditioning installation, **characterised in that** there is provided an additional blower (12) which feeds contaminated fresh air (40) to the cyclone (16).

2. An arrangement according to claim 1 **characterised in that** the coarse dust pre-separator (10) is arranged outside a fresh air induction tract (32) of the air-conditioning installation (30).

3. An arrangement according to one of the preceding claims **characterised in that** the additional blower (12) and the cyclone (16) are connected by way of an air conduit (14) to a cross-section that enlarges in the direction towards the cyclone.

4. An arrangement according to one of the preceding claims **characterised in that** the cyclone is a multi-cell cyclone (16).

5. An arrangement according to one of the preceding claims **characterised in that** the coarse dust pre-separator (10) is connected by means of an air guide system (20) to the fresh air induction tract (32) of the air-conditioning installation (30).

6. An arrangement according to one of the preceding claims **characterised in that** the coarse dust pre-separator (10) is arranged within the housing (34) of the air-conditioning installation (30).

## Revendications

1. Dispositif pour la climatisation de l'habitacle d'un véhicule automobile, lequel comporte un climatiseur modulaire avec une soufflante destinée à aspirer de l'air frais et un séparateur préliminaire de poussières grossières, qui comporte au moins un séparateur à cyclone pour filtrer les impuretés hors de l'air frais destiné au climatiseur, **caractérisé en ce qu'**il est prévu une soufflante supplémentaire (12) qui achemine vers le séparateur à cyclone (16) de l'air frais (40) pollué.

2. Dispositif selon la revendication 1, **caractérisé en ce que** le séparateur préliminaire de poussières grossières (10) est disposé en dehors d'un conduit d'aspiration d'air frais (32) du climatiseur (30).

3. Dispositif selon l'une quelconque des revendications précédentes, **caractérisé en ce que** la soufflante supplémentaire (12) et le séparateur à cyclone (16) sont reliés l'un à l'autre via une conduite de circulation d'air (14) avec une section s'élargissant vers le séparateur à cyclone.

4. Dispositif selon l'une quelconque des revendications précédentes, **caractérisé en ce que** le séparateur à cyclone est un séparateur à cyclone (16) à plusieurs cellules.

5. Dispositif selon l'une quelconque des revendications précédentes, **caractérisé en ce que** le séparateur préliminaire de poussières grossières (10) est relié au conduit d'aspiration d'air frais (32) du climatiseur au moyen d'un système de guidage de l'air (20).

6. Dispositif selon l'une quelconque des revendications précédentes, **caractérisé en ce que** le séparateur préliminaire de poussières grossières (10) est disposé à l'intérieur du carter (34) du climatiseur (30).
